# EUROPEAN PATENT APPLICATION

(11) **EP 2 365 649 A1**
(43) Date of publication of application: **14.09.2011**
(21) Application number: 10002506.3
(22) Date of filing: 10.03.2010
(51) Int. Cl.: H04B 10/20, H04J 14/02, H04Q 11/00

(54) **Optical network and method of operating an optical network**

(71) Applicant: ADVA AG Optical Networking, 82152 Martinsried/München (DE)
(72) Inventor: Grobe, Klaus, Dr., 86919 Utting (DE)
(74) Representative: Dreiss

(57) **Abstract**

The invention relates to an optical network (100), particularly an optical access network, comprising an optical line termination, OLT, (110) and a plurality of passive optical networks, PONs, (120, 121) connected to said OLT (110), wherein said optical network (100) comprises at least one active amplifying remote node, AARN, (140) that is located outside the OLT (110), particularly remote from the OLT (110), and that is configured to provide optical pump power to at least two of said PONs (120, 121).

## Description

### Field of the Invention

The invention relates to an optical network, particularly an optical access network, comprising an optical line. termination, OLT, and a plurality of passive optical networks, PONs, connected to said OLT.

The invention further relates to a method of operating an optical network, particularly an optical access network, comprising an OLT and a plurality of PONs connected to said OLT.

### Background

PONs are widely used for providing optical access network structures due to their comparatively low degree of complexity which is based on their passive design. However, due to the passive design and the corresponding limited power budget, only a limited number of optical network units, ONUs, can be supplied by a PON or an optical network comprising PONs.

### Summary

It is an object of the present invention to provide an improved optical network and method of operating an optical network which offers a high degree of flexibility regarding the number of supported ONUs without sacrificing the main advantages of a PON-based network architecture.

According to the present invention, regarding the above-mentioned optical network, this object is achieved in that said optical network comprises at least one active amplifying remote node, AARN, that is located outside the OLT, particularly remote from the OLT, and that is configured to provide optical pump power to at least two of said PONs.

The inventive introduction of the AARN advantageously enables to locally provide optical pump power, e.g. for optically pumping optical amplifiers. Since the inventive AARN is located outside the OLT, the optical pump power can advantageously be provided where it is actually required, particularly within the various PONs of the inventive optical network. In contrast to conventional optical networks, where pump power sources are co-located with the OLT, the present invention does not require to employ pump power levels as are required with the conventional systems, which may pose problems under the aspect of laser safety, e.g. in case of a broken optical fiber.

According to an embodiment, said AARN is preferably connected to said PONs via dedicated optical connections such as separate fiber links which enables a flexible positioning of said AARN relative to the PONs.

According to a further preferred embodiment, said active amplifying remote node comprises at least one pump light source for providing said optical pump power. The pump light source may be configured to provide optical pump power for a doped fiber amplifier, particularly an Erbium-doped fiber amplifier and/or for a Raman amplifier.

The pump light source may e.g. comprise one or more semiconductor laser devices or other suitable sources of optical energy in the required wavelength ranges.

According to a further preferred embodiment said AARN is co-located with a node of said first passive optical network or said second passive optical network, which enables a very efficient optical pumping of both passive optical networks and does not substantially increase the complexity of the respective PONs.

According to a further preferred embodiment, said AARN is located closer to a node of one of said passive optical networks than to said optical line termination.

A further preferred embodiment proposes that an optical link between said OLT and a PON comprises an integrated Raman amplifier, which may e.g. be optically pumped by the inventive AARN.

The optical pump power provided by the AARN can be coupled to the respective components of a PON or an optical link between the OLT and the PON by per se known techniques, e.g. by means of an optical coupler. This way, especially in the case of Raman amplifiers being integrated into the optical links between the OLT and the PON, the optical pump power provided by the inventive AARN may be coupled to the optical link in downstream direction, i.e. in the direction from the OLT to the PON, or vice versa. It is also possible to provide optical coupling means that enable to provide the optical pump power of the AARN both in an uplink and a downlink direction to the optical link connecting the OLT with the PON.

A further preferred embodiment proposes that at least one PON comprises a passive amplifying remote node, PARN, that it is configured to optically amplify optical signals associated with said PON. Said passive amplifying remote node does not substantially increase the complexity of a respective PON because the passive amplifying remote node itself constitutes a passive component in that it does not require an electric power supply or any kind of communications channel required for transmitting control information or the like. Thus, the inventive PARN may advantageously be added to an existing PON without sacrificing the main advantage of the PON, namely its passive structure. Nevertheless, the inventive PARN advantageously enables to locally amplify optical signals that are associated with the respective PON, i.e. either uplink signals and/or downlink signals.

According to a further preferred embodiment, the passive amplifying remote node comprises a doped fiber amplifier, particularly an Erbium-doped fiber amplifier, and/or a Raman amplifier. In either case, the inventive AARN used for providing the optical pump power for the PARN should comprise optical pump power sources compatible with the optical amplifiers comprised within the specific PARN.

A very efficient optical amplification throughout the whole inventive optical network is realized by providing one PARN at each PON. This measure does not cause any of the involved PONs to lose its passive properties while at the same time enabling an efficient optical amplification within each PON of the optical network.

The number of active amplifying remote nodes is generally chosen depending on the specific optical network structure, particularly the distances between single passive optical networks to be provided with the pump power. Typically, one AARN may be provided for simultaneously supplying two PARNs of different PONs with optical pump power. It is also possible to supply more than two PARNs or PONs respectively, by using one single AARN.

The inventive network structure comprising one or more AARNs which are used for supplying numerous PONs with optical pump power ensures that only a limited number of active components, namely the AARN, are added to the optical network while at the same time increasing the flexibility of the optical network, especially regarding the maximum number of ONUs to be supplied by the optical network due to the distributed optical amplification.

Since even the active components, the inventive AARNs, usually only comprise optical pump power sources, they too, have only a limited complexity.

Generally, it is preferred to choose the number of AARNs for the inventive optical network between the number of OLTs and the number of PONs.

A further solution to the object of the present invention is provided by a method of operating an optical network according to claim 11. The inventive method proposes to provide optical pump power to at least two of said PONs of the optical network by at least one active amplifying remote node that is located outside the OLT, particularly remote from the OLT.

According to a particularly preferred embodiment, at least two PONs are simultaneously provided with optical pump power by said AARN.

Further advantageous embodiments are given by the dependent claims.

Further features, aspects and advantages of the present invention are presented in the following detailed description with reference to the drawings in which:
Figure 1 depicts a first embodiment of an inventive optical network,
Figure 2a depicts a simplified block diagram of an active amplifying remote node according to an embodiment of the present invention,
Figure 2b depicts a simplified block diagram of an embodiment of a passive amplifying remote node, and
Figure 3 depicts a second embodiment of an inventive optical network.

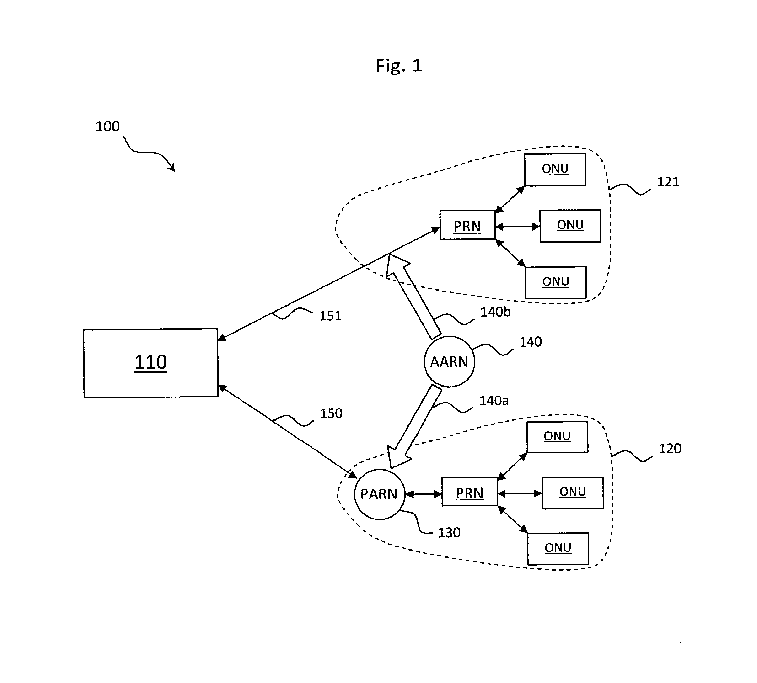

Figure 1 depicts a first embodiment of an inventive optical network 100, which comprises an optical line termination, OLT, 110 and two passive optical networks, PONs, 120, 121, which are connected to said OLT 110 via respective optical links 150, 151.

The optical network 100 may e.g. represent an optical access network which realizes an optical data transmission between the OLT 110, that may be located at a central office of the optical network's operator, and a plurality of ONUs, which may e.g. be located at customers' premises.

According to the present embodiment, each of the passive optical networks, 120, 121 comprises a passive remote node PRN to which several ONUs are connected in a per se known manner, e.g. comprising an optical tree structure. The PRN may for instance comprise filter and/or multiplexing means based on arrayed waveguide gratings, AWG, to separate and/or combine certain wavelengths of WDM PON systems. Although the PONs 120, 121 may also be operated with a single wavelength, it is preferred to employ per se known WDM, wavelength division multiplexing, schemes to increase the overall available data rate.

According to an embodiment of the present invention, the optical network 100 comprises an active amplifying remote node, AARN, 140 which is located outside the OLT 110. Preferably, the AARN 140 is located remote from the OLT 110, for instance neighboring to one or both of said PONs 120, 121.

The AARN 140 is configured to provide optical pump power to at least two PONs of the optical network 100, presently to the PONs 120, 121.

Thus, optical signals associated with the PONs 120, 121 may advantageously be optically amplified by means of the optical pump power provided by the AARN 140. This is especially advantageous since only one active component, the AARN 140 is required to provide optical amplification facilities for both PONs 120, 121.

For instance, the first PON 120 further comprises a passive amplifying remote node 130, which may e.g. comprise an optical amplifier such as a doped fiber amplifier or the like which may utilize the optical pump power provided by the AARN 140.

According to the present embodiment, the AARN 140 comprises dedicated optical connections 140a, 140b which enable a direct transmission of the optical pump power to the respective PON 120, 121.

The dedicated optical connection 140a provides the PARN 130 of the first PON 120 with the optical pump power generated by the AARN 140. The dedicated optical connection 140b provides the PON 121 with optical pump power generated by the AARN 140.

In contrast to the first PON 120, the second PON 121 does not comprise a PARN 130 which effects optical amplification. The second PON 121 may rather comprise an integrated fiber amplifier such as a Raman amplifier that is integrated into the optical link 151 connecting the second PON 121 with the OLT 110.

Thus, the second PON 121, too, may advantageously employ the optical pump power provided by the inventive AARN 140.

A further specific advantage of the inventive optical network is the fact that the provisioning of the AARN 140 outside of the OLT 110 enables an efficient local optical pumping since the pump power provided by the AARN 140 is directly coupled to the respective amplifying components 130, 151 at the PONs 120, 121.

This advantageously eliminates the need for providing exceedingly high optical pump power levels coupled to the optical links 150, 151 at the OLT 110 as is done by conventional systems. The conventional technique has the disadvantages of reduced laser security due to the exceedingly high pump power levels that are required because optical pump power is provided remotely, i.e. from the OLT 110, and undesired nonlinear effects due to the exceedingly high pump power levels.

In contrast, the inventive provisioning of the AARN 140 in the direct neighborhood of the PONs 120, 121 advantageously enables to employ moderate pump power levels via the dedicated optical links 140a, 140b so that increased laser security is also provided by the inventive configuration.

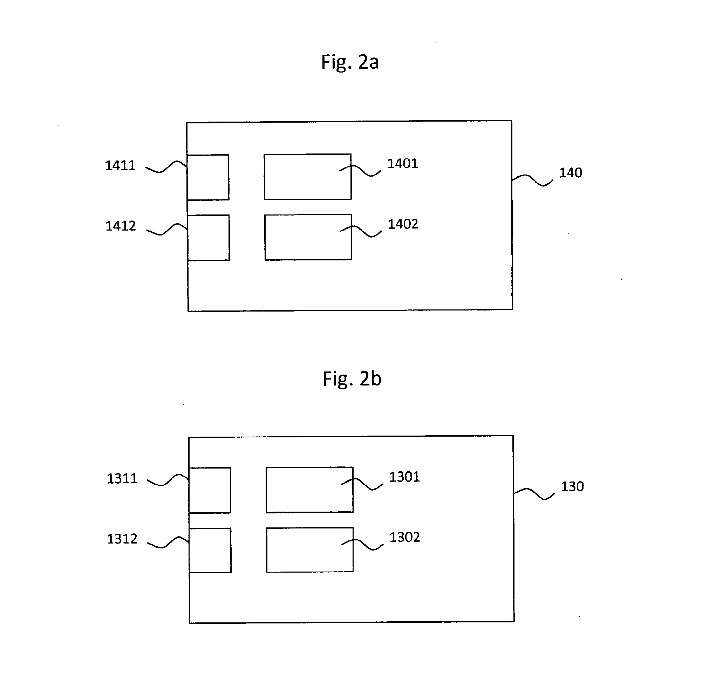

Figure 2a depicts a simplified block diagram of an embodiment of the inventive AARN 140. According to the present embodiment, the AARN 140 comprises a first pump light source 1401 and a second pump light source 1402. The first pump light source 1401 is presently configured as a pump light source providing suitable optical pump power for an Erbium-doped fiber amplifier, which may e.g. be comprised in the PARN 130 of the first PON 120, confer Figure 1. The second pump light source 1402 is configured to provide optical pump power suitable for optically pumping a Raman amplifier integrated into the optical link 151 of the second PON 121, confer Figure 1.

The optical pump power generated by the pump light sources 1401, 1402 is coupled to dedicated optical connections 140a, 140b (Figure 1) via optical ports 1411, 1412 also comprised within the AARN 140.

As can be seen from Figure 2a, although being an active component due to the pump light sources 1401, 1402, the inventive AARN 140 comprises comparatively few components and thus does not exceedingly contribute to an overall system complexity.

Figure 2b depicts a simplified block diagram of an embodiment of the inventive passive amplifying remote node, PARN, 130. The PARN 130 comprises an Erbium-doped fiber amplifier 1301. The PARN 130 may also comprise a further optical amplifier, e.g. a Raman amplifier 1302, which may also be part of the optical link 150 connecting the OLT 110 with the first PON 120, confer Figure 1. The PARN 130 also comprises optical ports 1311, 1312 for receiving optical pump power that is delivered by the inventive AARN 140 via the dedicated optical connection 140a, confer Figure 1.

Both the PARN 130 of the first PON 120 and the optical link 151 of the second PON 121 (confer Figure 1) may comprise optical couplers for coupling the optical pump power provided by the AARN 140 to the components 130, 151 in a per se known manner.

In the case of the second PON 121, a respective optical coupler may e.g. enable to couple optical pump power provided by the AARN 140 via the dedicated optical link 140b either in a downlink direction, i.e. to the PRN of the second PON 121 or in an uplink direction, i.e. to the OLT 110, or in both directions.

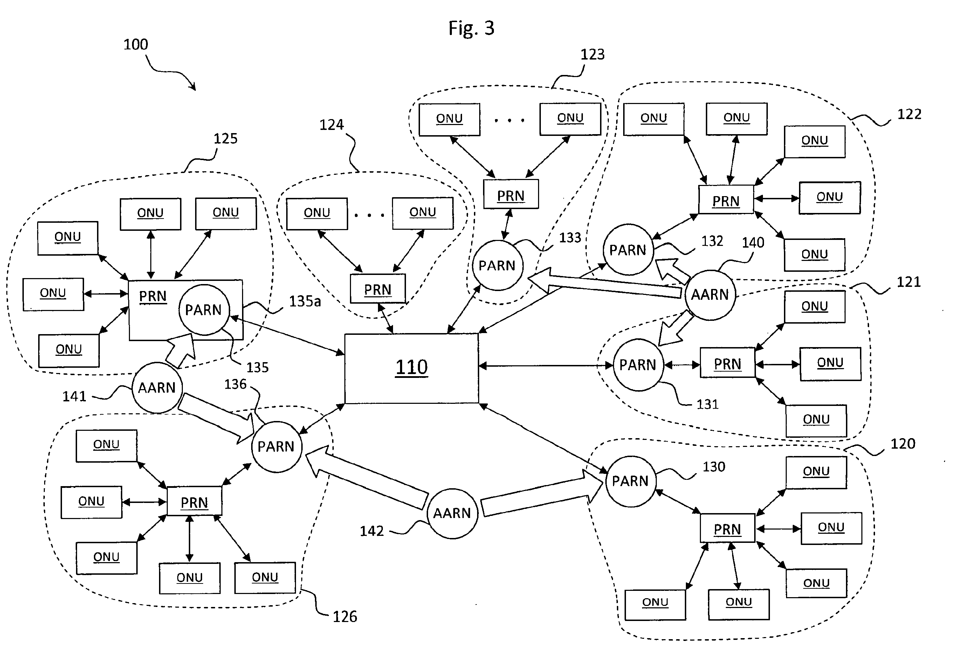

Figure 3 depicts a further embodiment of an inventive optical network 100.

The inventive optical network 100 comprises seven passive optical networks 120, ..., 126. The fifth PON 124 is situated in the neighborhood of the OLT 110, i.e. a length of the optical fiber connecting the OLT 110 with the fifth PON 124 is comparatively short. For this reason, no optical amplification of optical signals associated with the fifth PON 124 is required according to the present embodiment. Insofar, the PON 124 does not exhibit any difference from conventional PONs attached to an OLT 110.

However, the second PON 121, the third PON 122, and the fourth PON 123 are not located in the direct neighborhood of the OLT 110, i.e. the respective optical links between the OLT 110 and the PONs 121, 122, 123 comprise a comparatively high length. To improve the transmission of optical signals from the OLT 110 to the ONUs of the PONs 121, 122, 123 and vice versa, the PONs 121, 122, 123 each comprise a PARN 131, 132, 133 which is preferably connected to a respective optical link leading to the OLT 110. Further passive remote nodes PRN of the PONs 121, 122, 123 are connected to the respective PARN 131, 132, 133 as can be seen from Figure 3.

To enable an efficient optical amplification of the optical signals associated with the PONs 121, 122, 123, a single active amplifying remote node, AARN 140 is provided outside the OLT 110, particularly remote to the OLT 110. More specifically, the AARN 140 can e.g. be comprised in the direct neighborhood of one or several of the PONs 121, 122, 123.

As already explained with reference to Figure 1, the AARN 140 comprises dedicated optical links which are represented by block arrows in Figure 3 and are used for supplying the PARNs 131, 132, 133 with the optical pump power generated within the AARN 140.

That is, according to the present embodiment depicted by Figure 3, the inventive AARN 140 simultaneously provides optical pump power for a total of three passive amplifying remote nodes 131, 132, 133 or three PONs 121, 122, 123 comprising said PARNs 131, 132, 133, respectively. Thus, without substantially increasing the complexity of the optical network 100 by introducing numerous active components 140, very efficient optical amplification of numerous PONs 121, 122, 123 is attained.

The optical network 100 comprises a second AARN 141 which provides optical pump power for the sixth PON 125 and the seventh PON 126. The sixth PON 125 comprises a passive amplifying remote node 135 which is presently integrated into a passive remote node 135a of the PON 125.

A third AARN 142 is also depicted by Figure 3 which serves to provide the PARN 130 of the first PON 120 and the PARN 136 of the seventh PON 126 with optical pump power.

As can be seen, it is also possible to simultaneously provide a PARN 136 or a respective PON 126 with optical pump power from different AARNs 141, 142, cf. the block arrows. However, such configuration will most probably be only contemplated in cases where a single AARN is not sufficient for optical pumping or where redundant dedicated optical links from the AARN 141 and the AARN 142 to the PARN 136 are required for reasons of operational security and resilience.

The embodiments of the present invention advantageously enable to provide support for large numbers of ONUs in complex PON deployments while at the same time only requiring few additional active components 140, 141, 142 thus basically maintaining the advantages of the PONs' passive design.

## Claims

1. Optical network (100), particularly optical access network, comprising an optical line termination, OLT, (110) and a plurality of passive optical networks, PONs, (120, 121) connected to said OLT (110), wherein said optical network (100) comprises at least one active amplifying remote node, AARN, (140) that is located outside the OLT (110), particularly remote from the OLT (110), and that is configured to provide optical pump power to at least two of said PONs (120, 121) .

2. Optical network (100) according to claim 1, wherein said AARN (140) is connected to said PONs (120, 121) via dedicated optical connections (140a, 140b).

3. Optical network (100) according to one of the preceding claims, wherein said AARN (140) comprises at least one pump light source (1401, 1402) for providing said optical pump power.

4. Optical network (100) according to claim 3, wherein said pump light source (1401, 1402) is configured to provide optical pump power for a doped fiber amplifier, particularly an Erbium-doped fiber amplifier, and/or for a Raman amplifier.

5. Optical network (100) according to one of the preceding claims, wherein said AARN (140) is co-located with a node (130, PRN) of said first PON (120) or said second PON (121).

6. Optical network (100) according to one of the preceding claims, wherein said AARN (140) is located closer to a node (130, PRN) of one of said PONs (120, 121) than to said OLT (110).

7. Optical network (100) according to one of the preceding claims, wherein an optical link (150, 151) between said OLT (110) and a PON (120, 121) comprises an integrated Raman amplifier.

8. Optical network (100) according to one of the preceding claims, wherein at least one PON (120) comprises a passive amplifying remote node, PARN, (130) that is configured to optically amplify optical signals associated with said PON (120).

9. Optical network (100) according to claim 8, wherein said PARN (130) comprises a doped fiber amplifier, particularly an Erbium-doped fiber amplifier (1301), and/or a Raman amplifier (1302).

10. Optical network (100) according to one of the claims 8 to 9, wherein each PON (120, 121) comprises one PARN (130).

11. Method of operating an optical network (100), particularly an optical access network, comprising an optical line termination, OLT, (110) and a plurality of passive optical networks, PONs, (120, 121) connected to said OLT (110), wherein optical pump power is provided to at least two of said PONs (120, 121) by at least one active amplifying remote node, AARN, (140) that is located outside the OLT (110), particularly remote from the OLT (110).

12. Method according to claim 11, wherein at least two PONs (120, 121) are simultaneously provided with optical pump power by said AARN (140).

13. Method according to one of the claims 11 to 12,
wherein optical signals associated with a PON (120) are optically amplified by a passive amplifying remote node, PARN, (130) comprised within said PON (120).

14. Method according to one of the claims 11 to 13,
wherein optical signals associated with a PON (120, 121) are optically amplified by a Raman amplifier which is integrated into an optical link (150, 151) between said OLT (110) and said PON (120, 121).
